# EUROPEAN PATENT SPECIFICATION

(11) **EP 4 507 453 B1**
(45) Date of publication and mention of the grant of the patent: **30.09.2026**
(21) Application number: 23191103.3
(22) Date of filing: 11.08.2023
(51) Int. Cl.: H04W 92/02, H04W 88/16, H04W 8/02

(54) **OPERATING A USER EQUIPMENT IN DIFFERENT AREAS WITH A RADIO ACCESS NETWORK OF A MOBILE COMMUNICATION NETWORK ACTING AS A VISITED MOBILE COMMUNICATION NETWORK WITH REGARD TO THE USER EQUIPMENT**
VERFAHREN ZUM BETREIBEN EINES TEILNEHMERGERÄTES IN VERSCHIEDENEN BEREICHEN
RÉSEAU D'UTILISATEUR, ÉQUIPEMENT UTILISATEUR, PROGRAMME ET SUPPORT LISIBLE PAR ORDINATEUR

(43) Date of publication of application: 12.02.2025
(73) Proprietor: Deutsche Telekom AG, 53113 Bonn (DE)
(72) Inventor: COLOM IKUNO, Josep, 2100 Korneuburg (AT); SCHMITT, Harald, 56170 Bendorf (DE)
(74) Representative: Schwöbel, Thilo K.

(56) References cited:
- EP-A1- 4 106 375
- US-A1- 2022 014 904
- "3rd Generation Partnership Project; Technical Specification Group Services and System Aspects Study on management and orchestration aspects with integrated satellite components in a 5G network (Release 16)", no. V0.5.0, 17 June 2020 (2020-06-17), pages 1 - 25, XP052266748, Retrieved from the Internet <URL:https://ftp.3gpp.org/Specs/latest/Rel-16/28_series/28808-050.zip 28808-050.docx> [retrieved on 20200617]
- MEDIATEK INC ET AL: "New SID on Study on complementary reuse of terrestrial spectrum in satellite deployments", vol. TSG RAN, no. Taipei, Taiwan; 20230615 - 20230616, 11 June 2023 (2023-06-11), XP052509844, Retrieved from the Internet <URL:https://ftp.3gpp.org/Meetings_3GPP_SYNC/Workshop/2023_06_RAN_Rel19_WS/Docs/RWS-230110.zip RWS-230110 TN-NTN spectrum reuse.docx> [retrieved on 20230611]
- JOHNS HOPKINS: "R19 NTN Enhancements Johns Hopkins University APL", vol. TSG RAN, no. 20230615 - 20230616, 11 June 2023 (2023-06-11), XP052509785, Retrieved from the Internet <URL:https://ftp.3gpp.org/Meetings_3GPP_SYNC/Workshop/2023_06_RAN_Rel19_WS/Docs/RWS-230051.zip RWS-230051 R19 NTN Enhancements JHUAPL.pdf> [retrieved on 20230611]
- "Satellite Access: SA Rel-19 topics & priorities", vol. TSG SA, no. Taipei; 20230613 - 20230614, 13 June 2023 (2023-06-13), XP052510588, Retrieved from the Internet <URL:https://ftp.3gpp.org/Meetings_3GPP_SYNC/Workshop/2023-06-13_SA_Rel-19_WorkShop/Docs/SWS-230081.zip SWS-230081 was 0063 Satellite Access - SA Rel-19 topics and priorities_V12.pptx> [retrieved on 20230613]

## Description

### FIELD OF THE INVENTION

The present invention relates to a method for operating a user equipment in different areas with a radio access network of a mobile communication network acting as a visited mobile communication network with regard to the user equipment, wherein the radio access network of the visited mobile communication network that is serving the user equipment uses one network identifier for the different areas,
wherein the user equipment has, or is assigned to, a home communication network, and wherein furthermore, an interconnecting communication network and/or a further interconnecting communication network is able to be used between, or to interconnect, the visited mobile communication network and the home communication network.

Additionally, the present invention relates to a system or to a mobile communication network for operating a user equipment in different area s with a radio access network of the mobile communication network acting as a visited mobile communication network with regard to the user equipment, wherein the radio access network of the visited mobile communication network that is serving the user equipment uses one network identifier for the different area s,
wherein the user equipment has, or is assigned to, a home communication network, and wherein furthermore, an interconnecting communication network and/or a further interconnecting communication network is able to be used between, or to interconnect, the visited mobile communication network and the home communication network.

Furthermore, the present invention relates to a program and to a computer-readable medium for operating a user equipment in different areas with a radio access network of a mobile communication network acting as a visited mobile communication network with regard to the user equipment according to the inventive method.

### BACKGROUND

In currently deployed mobile communication networks, it is more and more possible to integrate the use of non-terrestrial networks (NTNs) and terrestrial networks (TNs). Typically, a non-terrestrial network uses its own network identifier (e.g. a PLMN ID) to serve multiple countries and agreements exist so that customers of a given terrestrial network can use the non-terrestrial network in the manner of a typically roaming scenario, i.e. it is possible that a user equipment is able to be connected to a non-terrestrial network that provides radio coverage to that user equipment, and the non-terrestrial network might act as a visited mobile communication network with regard to that considered user equipment, i.e. the visited mobile communication network (especially a non-terrestrial network) is serving the user equipment. As already mentioned, such a visited mobile communication network (especially a non-terrestrial network) uses its network identifier.
As such visited mobile communication networks - especially in case of non-terrestrial networks - are able to cover different (especially geographical) areas, e.g. different countries, the visited mobile communication network is able to be used such that only one network identifier for such different (especially geographical) areas is used, or 'seen' by the user equipment. Furthermore, it is often the case in such a situation, that such a visited mobile communication network is considered to be international or supranational (or act as an international or supranational network), especially by means of using an international network identifier or PLMN ID.
As it is typically the case, the user equipment has, or is assigned to, a home communication network that is typically directly or indirectly (e.g. via an interconnecting communication network and/or via a further interconnecting communication network) connected to the visited mobile communication network.

However, in case that the visited mobile communication network is or acts as an international or supranational network, there might nevertheless be frequency resources used that might be considered to be national frequency resources, or that might be subject to national regulation. In such a situation, it might be challenging to satisfy all national requirements or regulations - especially regarding lawful interception and/or other similar regulatory services, which are generally referred to as lawful interception - associated with the use of such national frequency resources, especially assuring that
-- traffic (both signaling and data (or user) traffic) flowing from the visited mobile communication network (especially a NTN-PLMN) towards the home communication network of the user equipment is routed such that national regulation, based on where the user equipment is located and/or which spectrum is being used, is able to be assured, and that this requirement is respected also in case that the user equipment changes its location, i.e. moves (especially across country borders), especially if such a change results in a change of the applicable regulation, such that the applicable national regulation, based on where the user equipment is located and/or which spectrum is being used, is able to be assured.
3GPP TR 28.841 V1.0.0 (2023-06 ) discloses two separate 3GPP networks, one with a satellite satellite NR access network and one with a terrestrial access network (HPLMN). Both networks have their own PLMN ID and a roaming agreement in place with each other.

### SUMMARY

An object of the present invention is to provide a technically simple, effective and cost-effective solution for operating a user equipment in different countries such that - with a radio access network of a mobile communication network acting as a visited mobile communication network with regard to the user equipment - the radio access network of the visited mobile communication network being a non-terrestrial network that is serving the user equipment uses one network identifier for the different countries and such that nevertheless all national requirements or regulations - especially regarding lawful interception and especially associated with the use of national frequency resources - are able to be fulfilled. A further object of the present invention is to provide a corresponding system or mobile communication network, a corresponding corresponding program and computer-readable medium.

The object of the present invention is achieved by a method for operating a user equipment in different countries with a radio access network of a mobile communication network acting as a visited mobile communication network being a non-terrestrial network with regard to the user equipment, wherein the radio access network of the visited mobile communication network that is serving the user equipment uses one network identifier for the different countries wherein the user equipment has, or is assigned to, a home communication network, and wherein furthermore, an interconnecting communication network and/or a further interconnecting communication network is able to be used between, or to interconnect, the visited mobile communication network and the home communication network, wherein, in order to operate the user equipment with the radio access network of the visited mobile communication network in different areas, the method comprises the following steps:
-- in a first step, the user equipment is operated in a specific country wherein the interconnecting communication network is used between the visited mobile communication network and the home communication network,
-- in a second step, the user equipment is operated in a further specific country wherein either the further interconnecting communication network is used between the visited mobile communication network and the home communication network, or the home communication network directly interacts with, or is directly connected to, the visited mobile communication network.

It is thereby advantageously possible, according to the present invention that all national requirements or regulations - especially regarding lawful interception - are able to be fulfilled or respected, which national requirements or regulations are applicable in view of the location of the user equipment and in view of the user equipment (and the visited mobile communication network) using assets, especially frequency or spectrum assets, assigned to the area where the user equipment is currently located.

In conventionally known communication networks or mobile communication networks, such a regulatory compliance is not able to be always and continuously assured, especially in case that the considered user equipment is provided with radio coverage and connectivity by the visited mobile communication network being an international network or a supranational network, especially in the form of a non-terrestrial network, and in case that specific requirements or regulations are to be respected in the country ( country A) where the considered user equipment is currently located (and whose frequency assets are used) and while the considered user equipment has, or is assigned to a home communication network of another country ( country B). In conventionally known communication networks, in a classical roaming scenario, the visited mobile communication network is directly or indirectly connected to the home communication network, and, hence, it would (at least generally) not always be possible to assure that traffic flowing from the visited mobile communication network towards the home communication network of the user equipment is actually routed such that national regulation is respected (based on where the user equipment is located (i.e. in which country and which (frequency) spectrum is used.
Additionally, in case the considered user equipment moves (e.g. crosses country borders), again, it is - in conventionally known communication networks or mobile communication networks -, at least generally, not possible to dynamically change the setup so that the above mentioned condition is met, i.e. that such traffic is actually routed such that (potentially differing) national regulation is respected.

The present invention consists in a satellite provider operating a non-terrestrial network (visited mobile communication network) and using terrestrial spectrum from, or assigned to, an operator of a terrestrial mobile communication network (interconnecting communication network). This (terrestrial) spectrum might be sublet to the operator of the non-terrestrial network, which operator is then able to use it for satellite-based 4G/5G connectivity to customers being located within the area served by the interconnecting communication network. The non-terrestrial network (visited mobile communication network), uses its own (typically international) network identifier, especially a PLMN ID and serves its customers which also include customers having a different home communication network (e.g. in country B, e.g. of other operators). Hence, such customers would be able to unknowingly use, while being located in country A (and by means of using the visited mobile communication network, e.g. the non-terrestrial network, with its network identifier) the (especially terrestrial) spectrum used by the visited mobile communication network but associated to country A. Hence, it cannot be assured that - while the terrestrial spectrum of or associated to country A is used by the visited mobile communication network and by such a user equipment that has its home network outside country A - the regulatory obligations applicable within country A (whose terrestrial spectrum is used) are met or fulfilled.

According to the present invention, it is supposed that a user equipment is able to be operated in different areas with a radio access network of a mobile communication network that acts as a visited mobile communication network with regard to the considered user equipment. Furthermore, it is assumed that the radio access network of the visited mobile communication network (that is serving the considered user equipment) uses one network identifier (i.e. an identical network identifier, e.g. a PLMN ID) for the different areas (especially geographical areas, especially countries) where the user equipment is able to be located. As it is typically and conventionally the case, the user equipment has, or is assigned to, a home communication network. Furthermore, and again as is typically and conventionally the case, between the visited mobile communication network and the home communication network (of the considered user equipment), the use of an interconnecting communication network and/or a further interconnecting communication network is able to be used between. In order to operate the considered user equipment with the radio access network of the visited mobile communication network in different areas, the method comprises: in a first point in time, operating the user equipment in a (first) specific country such that the interconnecting communication network is used between the visited mobile communication network and the home communication network, and, in a second (especially subsequent but potentially also previous) point in time, operating the user equipment in a further (or second) specific country such that either the further interconnecting communication network is used between the visited mobile communication network and the home communication network, or that the home communication network directly interacts with, or is directly connected to, the visited mobile communication network.

By means of changing (or switching) the interconnecting communication network (i.e. from the (first) interconnecting communication network to the further (or second) interconnecting communication network; or from the interconnecting communication network to the home (mobile) communication network) upon the user equipment changing (or moving) from the (first) specific (geographical) country to the further (or second) specific (geographical) country, it is advantageously possible, according to the present invention, to ensure that traffic from user equipments that are using terrestrial frequencies associated to country A is actually available within country A. Thereby, it is advantageously possible that the visited mobile communication network (especially, but not necessarily, a non-terrestrial network, using its NTN PLMN ID) is able to cover several countries by means of using, in each country, the respective local terrestrial frequencies (i.e., in general, different (but not necessarily different) frequencies in different countries), and that nevertheless regulatory compliance is able to be assured - and despite user equipments moving between different specific areas, i.e. from one (first) specific area to a further (or second) specific area, typically from one country to another (while using the same network identifier of the visited mobile communication network) - by means of dynamically (path) switching the respective interconnecting communication network (or transit network or transit PLMN) based on the current user equipment location.
Hence, it is advantageously possible that whenever the user equipment changes location, the respective interconnecting communication network (or transit PLMN) is dynamically switched, such that the traffic reaches the home communication network (H-PLMN) of the considered user equipment via either the interconnecting communication network or the further interconnecting communication network. Especially, this switching functionality is able to be provided in a manner decoupled from the serving visited mobile communication network, e.g. as a service by an IPX provider.

According to the present invention, it is advantageously possible and preferred that - while the user equipment is operated in the specific countryradiofrequency spectrum resources are used, regarding the user equipment, by the radio access network of the visited mobile communication network, the radiofrequency spectrum resources being assigned or associated to the interconnecting communication network, and wherein - while the user equipment being operated in the further specific country, rex especially a further geographical area - further radiofrequency spectrum resources are used, regarding the user equipment, by the radio access network of the visited mobile communication network, the further radiofrequency spectrum resources being assigned or associated either to the further interconnecting communication network or to the home communication network.

It is thereby advantageously possible to realize and implement the inventive method in a comparatively simple and efficient manner.

According to the present invention, it is advantageously furthermore possible and preferred that - while the user equipment is operated in the specific country
- the specific country is assigned or associated to the interconnecting communication network, and wherein - while the user equipment is operated in the further specific country
- the further specific country is assigned or associated either to the further interconnecting communication network or to the home communication network.

It is thereby advantageously possible to realize and implement the inventive method in a comparatively simple and efficient manner.

According to the present invention, it is advantageously furthermore possible and preferred the network identifier is or comprises a public land mobile network identifier.

It is thereby advantageously possible to realize and implement the inventive method in a comparatively simple and efficient manner.

According to the present invention, it is furthermore advantageously possible and preferred that a dynamic path switching is performed such that:
-- upon the user equipment moving from the specific country to the further specific country, either the further interconnecting communication network or the home communication network is used - between the visited mobile communication network and the home communication network - instead of the interconnecting communication network, and
-- upon the user equipment moving from the further specific country to the specific country, the interconnecting communication network is used - between the visited mobile communication network and the home communication network - instead of either the further interconnecting communication network or the home communication network.

It is thereby advantageously possible to realize and implement the inventive method in a comparatively simple and efficient manner.

Furthermore, it is advantageously possible and preferred according to the present invention that the dynamic path switching from a source network to a target network - from the interconnecting communication network as source network to either the further interconnecting communication network or to the home communication network as target network when the user equipment moves from the specific country to the further specific country, and from either the further interconnecting communication network or the home communication network as source network to the interconnecting communication network as target network when the user equipment moves from the further specific country to the specific country
- is realized implementing a state transfer between the source and target networks,
wherein especially the state transfer between the source and target networks is realized by means of using
-- an indirect state transfer wherein the visited mobile communication network is transferring, or helping to transfer, the state of the source network towards the target network, and/or
-- a direct state transfer wherein the source network is transferring its state to towards the target network,
wherein especially the state transfer between the source and target networks involves a transfer of endpoint information between the home communication network and the target network, the endpoint information especially relating to which endpoint information is to be used by the home communication network with regard to the user equipment.

It is thereby advantageously possible to realize and implement the inventive method in a comparatively simple and efficient manner.

Furthermore, it is advantageously possible and preferred according to the present invention that the dynamic path switching and/or the state transfer between the source and target networks is performed by the visited mobile communication network or by an interconnection provider, especially an IPX provider or an IPX provider network, wherein especially the IPX provider or the IPX provider network or the interconnection provider comprises any of the following functionality:
-- dynamic path switching, source network and target network,
-- dynamic path switching and source network, especially to a target network not comprised in the IPX provider or the IPX provider network or the interconnection provider,
-- dynamic path switching, especially between a source network and a target network not comprised in the IPX provider or the IPX provider network or the interconnection provider
-- target network, especially when a further IPX provider or further IPX provider network or further interconnection provider comprises the functionality of the target network such that both while the user equipment is operated in the specific country as well as while the user equipment is operated in the further specific country the IPX provider or the IPX provider network or the interconnection provider is used between the visited mobile communication network and the home communication network.

It is thereby advantageously possible to realize and implement the inventive method in a comparatively simple and efficient manner.

Furthermore, it is advantageously possible and preferred according to the present invention that wherein the interconnecting communication network and/or the further interconnecting communication network comprise, are or correspond to a user plane function, UPF; access and mobility management function, AMF session management function, SMF; service communication proxy, SCP; secure edge protection proxy, SEPP; call session control function, CSCF; mobility management entity, MME; serving gateway, SGW; diameter routing agent, DRA; intercept related information point of interception, IRI-POI, general packet radio service tunnelling protocol, GTP, firewall.

It is thereby advantageously possible to realize and implement the inventive method in a comparatively simple and efficient manner.

Furthermore, it is advantageously possible and preferred according to the present invention that the user equipment is served - besides by the radio access network of the visited mobile communication network - by a further mobile communication network, wherein the visited mobile communication network and the further mobile communication network provide dual access to the user equipment.

It is thereby advantageously possible to realize and implement the inventive method in a comparatively simple and efficient manner.

Furthermore, the present invention relates to a system or to a mobile communication network for operating a user equipment in different countries with a radio access network of the mobile communication network acting as a visited mobile communication network being a non-terrestrial network with regard to the user equipment, wherein the radio access network of the visited mobile communication network that is serving the user equipment uses one network identifier for the different countries, wherein the user equipment has, or is assigned to, a home communication network, and wherein furthermore, an interconnecting communication network and/or a further interconnecting communication network is able to be used between, or to interconnect, the visited mobile communication network and the home communication network, wherein, in order to operate the user equipment with the radio access network of the visited mobile communication network in different countries, the system or mobile communication network is configured such that:
-- the user equipment is operated in a specific country, wherein the interconnecting communication network is used between the visited mobile communication network and the home communication network,
-- the user equipment is operated in a further specific country, wherein either the further interconnecting communication network is used between the visited mobile communication network and the home communication network, or the home communication network directly interacts with, or is directly connected to, the visited mobile communication network.

Additionally, the present invention relates to a program comprising a computer readable program code which, when executed on a processor of a network node of a system or a visited mobile communication network being a non-terrestrial network, causes the network node of the system or the visited mobile communication network being a non-terrestrial network to perform the inventive method.

Still additionally, the present invention relates to a computer-readable medium comprising instructions which when executed on a processor of a network node of a system or a visited mobile communication network being a non-terrestrial network, causes the network node of the system or the mobile communication network being a non-terrestrial network to perform the inventive method.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

Figure 1 schematically illustrates a user equipment in a radio environment such as to be able to be connected to a visited mobile communication network, wherein the visited mobile communication network is connected - directly or indirectly - to a home communication network.
Figure 2 schematically illustrates the connection, or chain of connections, between the user equipment on the one hand, and the home communication network (of that user equipment) on the other hand and according to the present invention, i.e. in a manner such that national regulation - based on where the user equipment is currently located and which spectrum is being used - is able to be assured: An interconnecting communication network (or transit network) is used between the home communication network and the visited mobile communication network.
Figures 3, 4 and 5 schematically illustrate different embodiments or implementations of variants regarding a switch of the connection, or chain of connections
   - between the user equipment on the one hand, and the home communication network (of that user equipment) on the other hand and according to the present invention - that not only provides the possibility that national regulation is able to be statically assured (i.e. regarding a considered specific point in time (or time interval) when the user equipment is located at a specific (static) location and when a specific spectrum is being used), but also that such connection, or chain of connections, is able to be dynamically switched and maintained such that national regulation is able to be assured in case the user equipment changes its location, i.e. moves (especially across country borders or other kinds of geographical borders) wherein such dynamic switching involves switching between the interconnecting communication network (or transit network) towards the further interconnecting communication network (or further transit network).

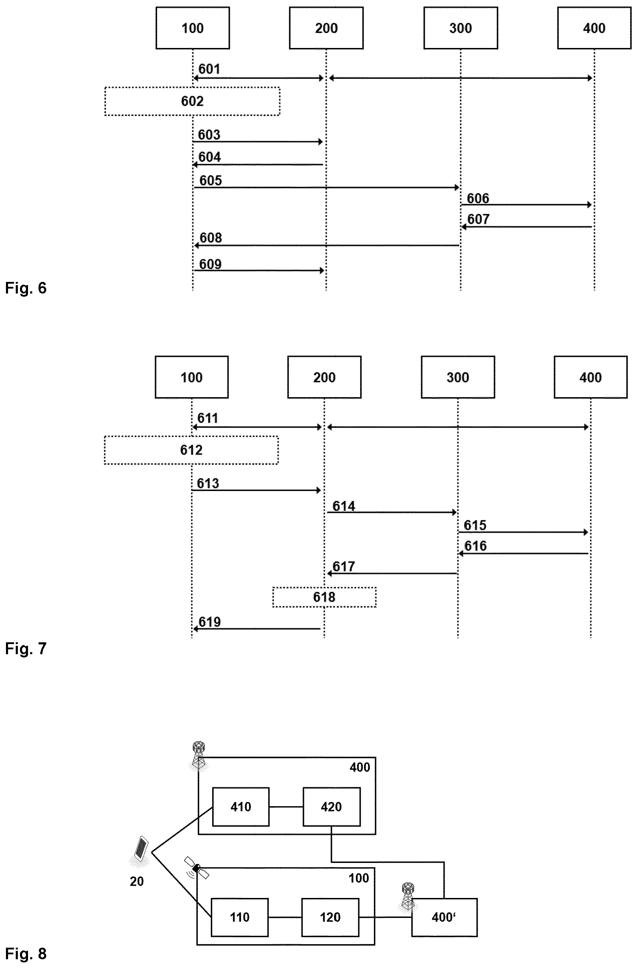

Figures 6 and 7 schematically illustrate examples of communication diagrams regarding different embodiments or implementations of variants regarding such a dynamic switching between the interconnecting communication network (or transit network) towards the further interconnecting communication network (or further transit network) according to the present invention.
Figure 8 schematically illustrates a situation of dual connectivity of the user equipment, especially without a roaming scenario.

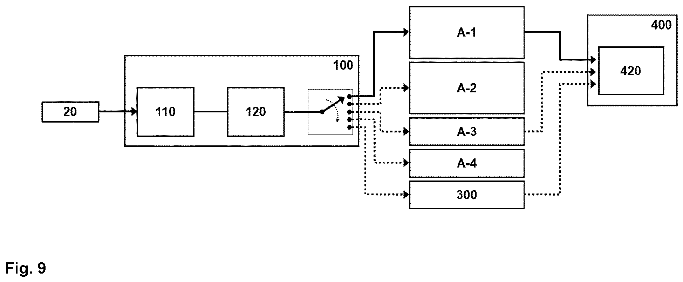

Figure 9 schematically illustrates a situation of the interconnecting communication network or transit network for dual connectivity of the user equipment.

### DETAILED DESCRIPTION

The present invention will be described with respect to particular embodiments and with reference to certain drawings, but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

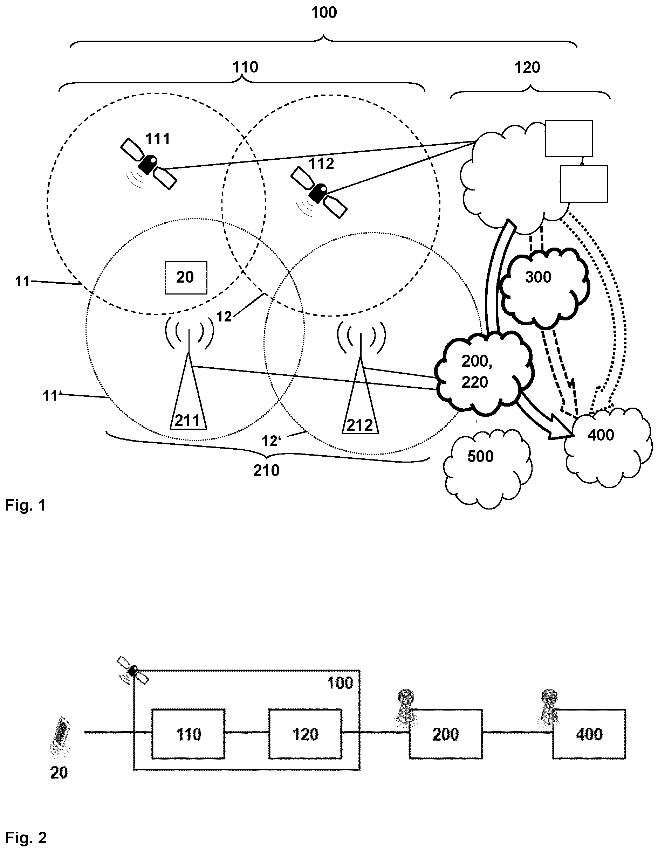

In Figure 1, a user equipment 20 is schematically shown in a radio environment such as to be able to be connected to a mobile communication network 100 that acts as a visited mobile communication network 100 to the user equipment 20. The visited mobile communication network 100 is connected - directly or indirectly - to a home communication network 400 of the user equipment 20.

In the exemplary embodiment shown in Figure 1, the visited mobile communication network 100 is shown to be a non-terrestrial network, comprising an access network or radio access network 110 that at least partly comprises non-terrestrial components such as satellites and/or high-altitude platforms. The visited mobile communication network 100 is typically realized as a cellular network or cellular mobile communication network 100, comprising, besides the radio access network 110, a core network 120 that typically comprises a number of network functions or services that are not specifically indicated by means of a reference sign in Figure 1. The (radio) access network 110 comprises a plurality of radio cells 11, 12, i.e. geographical areas that are served, respectively (and at least at a specific point in time), by base station entities represented by means of reference signs 111, 112. In the exemplary situation or scenario shown in Figure 1, a first base station entity 111 (shown as being located aboard a satellite) generates or is associated with or spans the first (non-terrestrial) radio cell 11, and a second base station entity 112 (likewise shown as being located aboard a satellite) generates or is associated with or spans the second (non-terrestrial) radio cell 12 (the first and second (non-terrestrial) radio cells 11, 12 being represented, in Figure 1, by means of dashed circles around the first and second base station entities 111, 112, respectively). The base station entities 111, 112 typically realize gNB functionality or next-generation gNB functionality. The mobile communication network 100 is typically connected to a plurality of user equipments (or, rather, the user equipments are connected to the visited telecommunications network 100). Figure 1 schematically only shows one user equipment 20, i.e. the situation of that user equipment 20 is represented in the visited communication network 100, whose (above mentioned) radio access network 110 is realized (exemplarily) as a non-terrestrial radio access network 110. However, according to the present invention, the visited mobile communication network 100 is not necessarily realized as a non-terrestrial network, and might also be realized as a terrestrial mobile communication network (which alternative is, however, not represented in Figure 1).
The considered user equipment 20 (that is schematically shown in Figure 1) also has (or is associated or assigned to) a home communication network 400 (especially a home mobile communication network 400), and the visited mobile communication network 100 might be either directly connected to such home communication network 400 (cf. a dotted arrow between the visited mobile communication network 100 and the home communication network 400 in Figure 1), or it might be indirectly connected to such home communication network 400 - either via an interconnecting communication network 200 between the visited mobile communication network 100 and the home communication network 400 (cf. a solid-line arrow in Figure 1), or via a further interconnecting communication network 300 between the visited mobile communication network 100 and the home communication network 400 (cf. a dashed arrow in Figure 1).

Figure 1 additionally shows the interconnecting communication network 200 exemplarily in the form of a terrestrial network, i.e. comprising a terrestrial radio access network 210 as well as (further) core network 220.
The interconnecting communication network 200 (exemplarily shown as a terrestrial mobile communication network) likewise comprises further base station entities that are schematically and exemplarily represented, in Figure 1, as a first further base station entity 211 and a second further satellite 212, wherein the first further base station entity 211 provides radio coverage in a first further (terrestrial) radio cell 11' and the second further base station entity 212 provides radio coverage in a second further (terrestrial) radio cell 12' (the first and second further (terrestrial) radio cells 11', 12' being represented, in Figure 1, by means of dotted circles around the first and second further base station entities 211, 212, respectively).
Especially and according to the present invention, the user equipment 20 is able to be provided with radio access network functionality and network connectivity by both the visited mobile communication network 100 and by means of the interconnecting (mobile) communication network 200 (simultaneously) - hereinafter also called dual access or dual steering.

As is exemplarily shown in Figure 1, by means of the visited mobile communication network 100 being represented, exemplarily, as a non-terrestrial network, such a visited mobile communication network 100 is able to cover different (especially geographical) areas, e.g. different geographical area or different countries, and, of course, the visited mobile communication network 100 is typically used such that only one network identifier for such different (especially geographical) areas is used, or 'seen' by the user equipment 20 (hence, such a visited mobile communication network 100 might be considered to be an international network or a supranational network (or act as an international or supranational network), especially by means of using an international network identifier or PLMN ID).
However, even in case that such a visited mobile communication network 100 is or acts as an international or supranational network, there might nevertheless be frequency resources used that might be considered to be national frequency resources, or that might be subject to national regulation - e.g. of the country or entity where the user equipment 20 is currently located.

In such a scenario in conventionally known communication networks or mobile communication networks, it is possible that it cannot be assured that all national requirements or regulations - especially regarding lawful interception - are able to be fulfilled in case that:
-- the considered user equipment 20 is provided with radio coverage and connectivity by the visited mobile communication network 100 being an international network or a supranational network (or acting as an international or supranational network), e.g. a non-terrestrial network,
-- while the considered user equipment 20 is currently located at or within an area or geographical area having specific, e.g. national, requirements or regulations (e.g. in a country A)
-- and while the considered user equipment 20 has, or is assigned to or associated with a home communication network 400 of another area or another geographical area (or another country, e.g. country B).
In such a situation, in a classical roaming scenario - e.g. where the visited mobile communication network 100 is directly or indirectly connected to the home communication network 400 - it would, typically (or, generally), not be possible to assure that traffic (both signaling and data traffic) that is flowing from the visited mobile communication network 100 (e.g. a NTN PLMN) towards the home (mobile) communication network 400 (of the user equipment 20) is actually routed such that national regulation is respected, based on where the user equipment 20 is located (i.e. in which area) and which (frequency) spectrum is used.
Furthermore, in case the considered user equipment 20 moves (e.g. crosses country borders), again, it is typically (or, generally) not possible - in conventionally known communication networks or mobile communication networks - to dynamically change the setup so that the above mentioned condition is met, i.e. that such traffic is actually routed such that (potentially differing) national regulation is respected, based on the new location of the user equipment 20 and based on which (frequency) spectrum is used.
In conventionally known mobile communication networks with typical inter-PLMN setups, this problem does not really exist due to the fact that currently known PLMNs are typically bound to a specific location, and non-terrestrial networks are typically using non-national frequencies or parts of the spectrum.
However, the increase in bandwidth needs also pushes non-terrestrial networks to use frequencies or parts of the radiofrequency spectrum that have, hitherto, been exclusively used by terrestrial networks; additionally, there a current push exists to more tightly integrate non-terrestrial networks and terrestrial networks.

One scenario according to the present invention consists in a satellite provider (operating a non-terrestrial network, i.e. the visited mobile communication network 100 in Figure 1) uses terrestrial spectrum from, or assigned to, an operator of a terrestrial mobile communication network, e.g. the interconnecting communication network 200 in Figure 1. This (terrestrial) spectrum (i.e. associated to the interconnecting communication network 200) is sublet to the operator of the non-terrestrial network, which operator is then able to use it for satellite-based 4G/5G connectivity to customers being located within the specific area served by the interconnecting communication network 200. Of course, the non-terrestrial network, or the visited mobile communication network 100, uses its own (typically international) network identifier, especially a PLMN ID. The operator of the non-terrestrial network, i.e. the visited mobile communication network 100, serves its customers; such customers include both:
-- customers for which the interconnecting communication network (or, rather, the interconnecting mobile communication network) 200 corresponds to their home network (e.g. in country A), and
-- other customers having a different home network such as home communication network 400 (e.g. in country B), i.e. of other operators having a business relationship with the operator of the non-terrestrial network (or NTN provider).
Hence, both these types of customers are allowed to use the non-terrestrial network (or visited mobile communication network 100) and reach their respective home networks, i.e. from the perspective of the user equipment 20 both cases correspond to plain normal 4G/5G-based roaming scenarios. However, this also means that a user equipment, having its home network in country B, would be able to unknowingly use, while being located in country A (and by means of using the visited mobile communication network 100, e.g. the non-terrestrial network, and its network identifier or NTN PLMN ID) the (terrestrial) spectrum (used by the visited mobile communication network 100 but) associated to country A.
Hence, in such a scenario, it cannot be assured that - while the terrestrial spectrum of or associated to country A is used (by the visited mobile communication network 100 and by the user equipment 20 that has its home network outside country A, namely its home communication network 400) - the regulatory obligations applicable within country A (whose terrestrial spectrum is used) are met or fulfilled.
According to the present invention, it is proposed to ensure that traffic from user equipments 20 that are using terrestrial frequencies associated to country A is actually available within country A; according to the present invention this is able to be realized by means of using the interconnecting communication network 200 as a "transient-PLMN" (or transit communication network) as a "middle part" between the visited mobile communication network 100 and the home communication network 400 of the user equipment 20. This is exemplarily shown in Figure 2 which schematically illustrates the connection, or chain of connections, between the user equipment 20 on the one hand, and the home communication network 400 (of that user equipment 20) on the other hand and according to the present invention, i.e. in a manner such that national regulation - based on where the user equipment 20 is currently located and which spectrum is being used - is able to be assured: An interconnecting communication network 200 (or transit network) is used between the home communication network 400 and the visited mobile communication network 100 (that comprises its (radio) access network 110 and its core network 120).
Thereby, it is advantageously possible that the non-terrestrial network (using its NTN PLMN ID), i.e. the visited mobile communication network 100, is able to cover several countries, but such visited mobile communication network 100 would use in each country the respective local terrestrial frequencies, i.e., in general, different frequencies in different countries. This is able to be realized by means of having specific (satellite spot) beams on specific frequencies covering specific geographical areas.
However, regarding user equipments 20 that are moving between different specific areas, i.e. from one specific area to another specific area (typically from one country to another), the issue to solve is how to ensure that respecting such above-mentioned conditions is able to be maintained even in case that the user equipment 20 moves (within the NTN PLMN ID) across borders (between countries). According to the present invention, it is proposed that the respective interconnecting communication network (or transit network or transit PLMN) is dynamically switched, e.g. from interconnecting communication network 200 (as shown in Figure 2), to the further interconnecting communication network 300.

Hence, in order to solve the abovementioned problem of a user unknowingly using (terrestrial) spectrum (of country A) that is used by the visited mobile communication network 100 but associated to country A and in order to assure that the regulatory obligations of country A (whose terrestrial spectrum is used) are met or fulfilled, it is proposed, according to the present invention, to introduce dynamic path switching between operators based on the user equipment location, such that:
-- traffic of a given user equipment is routed via a third operator (transit PLMN, or interconnecting communication network), located under the regulation applicable to the location of the user equipment; the transit PLMN (or interconnecting communication network) then routes the traffic towards the H-PLMN (or home communication network) of the user equipment, wherein the transit/interconnecting PLMN could be, in some cases, also the H-PLMN of the user equipment;
-- whenever the user equipment changes location, the respective transit PLMN or interconnecting communication network is dynamically switched, such that the traffic reaches the H-PLMN (of the considered user equipment) via a second Transit PLMN (or further interconnecting communication network);
-- the transit PLMN functionality is able to be offered in a manner decoupled from the serving (NTN) PLMN (or visited mobile communication network), e.g. in a manner "as a Service" by an IPX provider or similar;
-- this is also able to be realized or implemented using a 5G core network or part thereof, especially including a secure edge protection proxy, SEPP or similar security element, where otherwise a secure edge protection proxy, SEPP, architecture between the mobile communication network 100 and the home communication network 400 typically does not allow such an implementation.

In conventional mobile communication networks, it is possible that a mobile communication network - especially a supra-national mobile communication network - provides overlapping coverage with other mobile communication networks which other mobile communication networks serve, respectively, different geographical areas, e.g. different countries (e.g. Iridium satellite phone coverage and 4G/5G-based coverage) - hence, in principle, the possibility of radio coverage being potentially provided - to a considered user equipment 20 - via multiple mobile communication networks (i.e. overlapping coverage) is not new as such.
In such a conventionally known scenario, a roaming architecture is able to be defined such that:
-- a first network, using a first PLMN ID, is used in a first country, country A (as conventionally known: the PLMN ID being composed of a mobile country code-part and a mobile network code-part, and being unique, especially being assigned by ITU-T; the mobile country code-part of the first PLMN ID identifies the first network as belonging to the first country) and
-- a second network, using a second PLMN ID, is used in a second country, country B, and the second PLMN ID indicates the second country, and
-- a third network, typically using an international PLMN ID (especially using "99" as the mobile country code-part) to indicate that it is not part of a specific country but, rather, 'international'.
In a roaming situation, the considered user equipment 20 is provided with connectivity - especially to an external data network, e.g. the internet - via a visited network (which has a roaming agreement with the user equipment's home network to either forward control plane, CP, and user plane, UP, traffic towards the home network (home routed case) or to locally route UP (local breakout case).
Additionally, in order to avoid having to (contractually) setup multiple (potentially many) roaming agreements and connectivity paths, IP exchange (IPX) providers exist such that a (mobile) operator can, by using an IPX provider as intermediary, reach multiple other operators without needing direct connectivity, i.e. the IPX provider provides connectivity between the visited network and the home network (of the considered user equipment in a roaming scenario of that user equipment).

In such a conventionally known roaming scenario (in case that the considered user equipment 20 is located in country A and has the second network (of country B) as its home network), the regulatory situation is the following:
Connectivity between the user equipment 20 and the access network 110 (of the visited mobile communication network 100) is realized via resources (e.g. spectrum) in country A, subject to country A's regulation. The jurisdiction between the (radio) access network 110 and the core network 120 of the visited mobile communication network 100 (third network) is out of scope of this solution; for practical purposes, it could even be "no country" (or "unclear jurisdiction"), such as in the case of space-based infrastructure.

As has already been mentioned, according to the present invention, in order to allow a regulatory-compliant use of country A's resources - especially regarding lawful interception -, the use of the (correct) interconnecting communication network 200, 300 (transit network or transit PLMN) is proposed (as shown in Figure 2 for the example of interconnecting communication network 200 as transit network.
The purpose of the transit network (or interconnecting communication network 200) is to ensure compliancy of country A's regulations. Such a transit network could, in practice, be implemented by means of a Diameter Routing Agent (DRA) in 4G or one or more SEPP network functions or services in the case of 5G (e.g. using PRINS, hosted SEPP or a similar setup).

The choice of a transit network or interconnecting communication network can also be combined in a more complex setup: This is, by combining multiple connectivity (e.g. dual connectivity, towards, on the one hand, the visited mobile communication network 100, and, on the other hand, a further connectivity to the interconnecting (mobile) communication network 200 that is acting as a second visited mobile communication network, as schematically hinted at in Figure 1) to several networks.
In this case, it is clear that the interconnecting communication network 200 (that is also acting as second visited mobile communication network) is under country the regulation of the country where the user equipment 20 is located (i.e. country A). The possibility of providing simultaneous connectivity, wherein the connectivity can additionally be simultaneously and jointly managed, via such interconnecting communication network 200 (acting as second visited mobile communication network) and the visited mobile communication network 100 provides a strong need for deploying such an architecture, which was not the case before, where NTN networks could simply operate in a completely independent fashion.
Combining supra-national networks with nationally-bound networks, for which such an NTN-TN integration/interconnection/combination is a good example that is currently developing, results in new issues that need to be resolved and that did not exist before in the field of mobile networks, where such systems operated in a more isolated fashion and/or were independently considered.
One aspect thereof regards mobility within the visited mobile communication network 100 (i.e. a movement of the user equipment 20 between the specific area to the further specific area) which is, in principle and from a technical standpoint, obvious that the user equipment 20 should be able to move freely within such visited mobile communication network 100.
The problem that arises in this case is that intermediate network elements (such as conventionally used networks providing an IP X functionality between two other networks) have not been designed to be dynamically inserted/removed (in/from a chain of connections).
According to the present invention, especially two variants are proposed regarding the dynamic change of the transit or interconnecting network:
-- dynamic change of transit network (i.e. interconnecting communication networks 200, 300) by the visited mobile communication network 100 based on the user equipment's 20 location and/or current connectivity;
-- offloading of the transit network functionality (and, hence, of such dynamic change of the transit or interconnecting network) to a third party.

Dynamic change of transit network by visited mobile communication network: For the simplest case, it is considered that based on the user equipment's location, the visited mobile communication network 100 chooses a new transit network (i.e. the further interconnecting communication network 300 instead of the interconnecting communication network 200) whenever the user equipment 20 moves to a new location (i.e. from the specific area to the further specific area).
Hence, such a transition or movement of the considered user equipment 20 (from the specific area to the further specific area) involves a change of the (geographical) area (especially a change of the country), and (as a consequence thereof) a change in the interconnecting communication network but no (or not necessarily a) change of the visited mobile communication network 100 (and, of course, no change of the home communication network 400) of the user equipment 20.
Hence, the user equipment 20 does not need to be aware of such a country/location change. Based on the frequency/frequencies the user equipment 20 has been allocated by the radio access network 110 (or other network-based means of the visited mobile communication network 100), the user equipment's 20 location can also be inferred. Of course, it might also be possible that the user equipment 20 report its location to the visited mobile communication network 100 or its home communication network 400. The user equipment 20 continuously sees as serving network (the visited mobile communication network 100, V-PLMN) and the user equipment 20 is continuously connected to its home communication network 400; whether the transit network (interconnecting communication network 200) or the further transit network (further interconnecting communication network 300) is being used (in the chain of being connected to its home communication network 400) is transparent for the user equipment 20.
According to the present invention, it is important to realize that the user equipment 20 does not need to be aware of the transit network (i.e. of which transit network (or interconnecting communication network) is used). In most regulatory use cases, it is a requirement that the user equipment 20 (and even the serving (visited mobile communication network 100) and/or home network 400) shall not be aware of what regulatory features are being used (e.g., especially in the case of legal interception).
In order to realistically be able to offer connectivity services, it is typically required that a user equipment's 20 traffic (both signaling and data) is sent to its home network 400 according to national regulatory requirements, which are often linked to the frequencies being used. With the trend of using terrestrial frequency bands for NTNs, there is a need to ensure regulatory compliance. Furthermore, availability of connectivity to a specific (home) network and load should also be considered.

The switching, according to the present invention, of the interconnecting communication network - i.e. the dynamic change of the transit or interconnecting network, e.g. by the visited mobile communication network 100 - is more complex than a plain IP route switch because mobile network transit elements such as Diameter Routing Agent, GTP firewall, Security Edge Protection Proxy (SEPP) or Service Communication Proxy (SCP) can be (and usually are) state-aware.
Hence, according to the present invention, it is preferred that - in order actually perform a transit network switch - a state transfer between two transit networks (or interconnecting communication networks 200, 300) is performed. In conventionally known mobile communication networks, such a state transfer among transit network is not (required to be) realized, as there is no need, e.g. for IPX providers, to handover because there is no need to "handover" between IPX providers; in contrast to the conventionally known inter-PLMN handover procedures (i.e. realized between two serving (or visited) networks. According to the present invention, there is no inter-PLMN handover, but - since the visited mobile communication network 100 has to comply with multiple regulations (depending on where the user equipment 20 is being served) - there is a need to switch between the transit or interconnecting networks 200, 300, and it is especially advantageous that the switch is, as opposed to inter-PLMN handover, realized without requiring the user equipment 20 to play an active role, which would require additional logic in the user equipment 20.

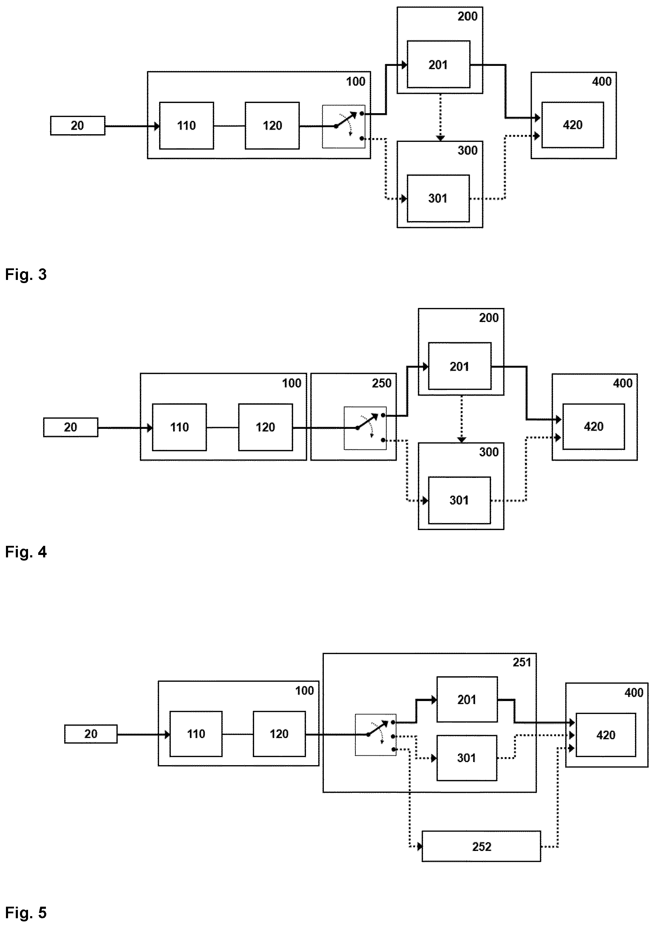

Figures 3, 4 and 5 schematically illustrate different embodiments or implementations of variants regarding such a switch of the connection, or chain of connections - between the user equipment 20 on the one hand, and the home communication network 400 (of that user equipment 20) on the other hand and according to the present invention. This not only provides the possibility that national regulation is able to be statically assured (i.e. regarding a considered specific point in time (or time interval) when the user equipment 20 is located at a specific (static) location (specific area) and when a specific spectrum is being used), but also that such connection, or chain of connections, is able to be dynamically switched and maintained such that national regulation is able to be assured in case the user equipment 20 changes its location, i.e. moves (especially across country borders or other kinds of geographical borders, i.e. from the specific area to the further specific area) wherein such dynamic switching involves switching between the interconnecting communication network (or transit network) 200 towards the further interconnecting communication network (or further transit network) 300.
Exemplarily, Figure 3 represents a solution or variant where the visited mobile communication network 100 realizes such switching of interconnecting communication networks 200, 300, i.e. by means of using a schematically represented switch (as part of the visited mobile communication network 100) the visited mobile communication network 100 chooses the user equipment 20 to be connected (to the home communication network 400) either via the interconnecting communication network 200 (schematically represented, in Figure 3, by means of drawn-through arrows) or via the further interconnecting communication network 300 (schematically represented, in Figure 3, by means of dotted arrows); thereby, it is advantageously possible, according to the present invention, to provide for, or realize, a dynamic change of the chosen (or selected) transit network 200, 300 based on user equipment 20 location; especially, a transfer of the connection state is performed (between a first transit node 201 (as part of the interconnecting communication network 200) towards a second transit node 301 (as part of the further interconnecting communication network 300)) between the interconnecting communication networks 200, 300.

This transfer of the connection state especially involves
-- to move the state between the interconnecting communication networks 200, 300 concerned, as well as
-- to notify the home communication network 400 that the transmit endpoints to be used are now in the further interconnecting communication network 300 (instead of in the interconnecting communication network 200); in the opposite direction, the endpoints of the home communication network 400 may be transferred to the further interconnecting communication network 300, but it might also be indicated, by the home communication network 400, to use other endpoints: e.g., another subnet and/or network interfaces may be used to communicate within that (different) country, so the same endpoints used with the interconnecting communication network 200 may not work for connectivity with the further interconnecting communication network 300). Unless this communication (of the correct endpoints to be used) is completed, traffic being sent from the further interconnecting communication network 300 may be dropped (unknown origin) by the home communication network 400 and/or traffic being sent from the home communication network 400 may not be able to reach the visited mobile communication network 100 because the interconnecting communication network 200 is not allowed anymore to act as interconnecting communication network or transit network for the considered user equipment 20.

Furthermore, the transfer of the connection state might either be realized directly or indirectly:
-- an indirect transfer of the connection state refers to the visited mobile communication network 100 transmitting the state (from the interconnecting communication network 200) to the further interconnecting communication network 300, whereas
-- a direct transfer (or transmission) of the connection state refers to the interconnecting communication network 200 (or transit network) transmitting the connection state to the further interconnecting communication network 300.
Figures 6 and 7 schematically illustrate examples of communication diagrams regarding different embodiments or implementations of variants regarding such a dynamic switching between the interconnecting communication network (or transit network) 200 towards the further interconnecting communication network (or further transit network) 300 according to the present invention:
Especially, Figure 6 schematically illustrates a state transfer using indirect transmission between transit networks 200, 300:
In a first processing step 601, the transit network (or interconnecting communication network) 200 is used for communication with the home communication network 400; i.e. this corresponds to the situation prior to the switching. In a second processing step 602, the decision is taken (in the exemplary embodiment shown in Figure 6, this decision is taken by the visited mobile communication network 100) to switch to the further interconnecting communication network (or transit network) 300.
In a third processing step 603, the visited mobile communication network 100 transmits a state request (message) regarding the considered user equipment 20 to the interconnecting communication network 200, and in a fourth processing step 604, the interconnecting communication network 200 transmits the user equipment's 20 connection state (by means of another message) to the visited mobile communication network 100.
In a fifth processing step 605, the visited mobile communication network 100 transmits the user equipment's 20 connection (by means of still another message) to the further interconnecting communication network 300. In a sixth processing step 606, the further interconnecting communication network 300 transmits its endpoint information (to be used) to the home communication network 400, and in a seventh processing step 607, the home communication network 400 transmits its endpoint information to the further interconnecting communication network 300.
In an eighth processing step 608, the further interconnecting communication network 300 transmits, to the visited mobile communication network 100, an information (especially a message) indicating that the transfer is successfully performed; finally, in a nineth processing step 609, the visited mobile communication network 100 indicates to the interconnecting communication network 200 to remove (to track) the state of the user equipment 20.
Especially, Figure 7 schematically illustrates a state transfer using direct transmission between transit networks 200, 300:
In a first processing step 611, the transit network (or interconnecting communication network) 200 is used for communication with the home communication network 400; i.e. this corresponds to the situation prior to the switching. In a second processing step 612, the decision is taken (in the exemplary embodiment shown in Figure 6, this decision is taken by the visited mobile communication network 100) to switch to the further interconnecting communication network (or transit network) 300.
In a third processing step 613, the visited mobile communication network 100 transmits a request (message), regarding the considered user equipment 20 and to the interconnecting communication network 200, to realize a state transfer to the further interconnecting communication network 300.
In a fourth processing step 614, the interconnecting communication network 200 transmits a (further) request (message), regarding the considered user equipment 20 and to the further interconnecting communication network 300, to realize a state transfer to the further interconnecting communication network 300.
In a fifth processing step 615, the further interconnecting communication network 300 transmits its endpoint information (to be used) to the home communication network 400, and in a sixth processing step 616, the home communication network 400 transmits its endpoint information to the further interconnecting communication network 300.
In a seventh processing step 617, the further interconnecting communication network 300 transmits, to the interconnecting communication network 200, an information (especially a message) indicating that the transfer is successfully performed;
In an eighths processing step 618, the interconnecting communication network 200 removes the state regarding the considered user equipment 20, and, finally, in a nineth processing step 619, the interconnecting communication network 200 transmits, to the visited mobile communication network 100, an information (especially a message) indicating that the transfer is successfully performed or completed.

As has been mentioned, one variant, according to the present invention, regarding the dynamic change of the transit or interconnecting network corresponds to offloading, of the transit network switching functionality or transit network logic, to a third party; different embodiments thereof or different variants thereof are schematically represented in Figures 4 and 5:
Exemplarily, Figure 4 represents a solution or variant where a transit provider 250 (or, intermediate transit provider 250) is used to realize the switching of (or between) the interconnecting communication networks 200, 300, i.e. the transit network switching functionality, is being offloaded to the transit provider 250, and the transit provider 250 chooses the user equipment 20 to be connected (to the home communication network 400) either via the interconnecting communication network 200 (schematically represented, in Figure 4, by means of drawn-through arrows) or via the further interconnecting communication network 300 (schematically represented, in Figure 4, by means of dotted arrows); thereby, it is advantageously possible, according to the present invention, to provide for, or realize, a dynamic change of the chosen (or selected) transit network 200, 300 based on user equipment 20 location; especially, a transfer of the connection state is performed (between the first transit node 201 (as part of the interconnecting communication network 200) towards the second transit node 301 (as part of the further interconnecting communication network 300)) between the interconnecting communication networks 200, 300.
The advantage of this setup is that the visited mobile communication network 100 does not need to be aware of the transit networks 200, 300 and/or of the switching between transit networks; hence, the transit network switching functionality or transit network logic might be able to be completely realized as a roaming value added service by an IPX service provider or roaming hub.
As a consequence of the offloading of the transit network switching functionality or transit network logic to the transit provider, the visited mobile communication network 100 does not need not implement the switching functionality, and, especially, all interactions of the visited mobile communication network 100 as described, with regard to the direct or indirect transmission between transit networks 200, 300, in Figures 6 and 7 would then be performed by the transit provider 250 instead of by the visited mobile communication network 100.
A further possible manner (or embodiment) of offloading the transit network switching functionality or transit provider logic (from the visited mobile communication network 100) is by offloading the transit network(s) (or some of them) to a first transit provider 251. In such a case, the first transit provider 251 is able to provide transit network (switching) functionality in many countries (i.e. it is able to provide "transit network as a service"), and for some countries/locations (that cannot be covered by the first transit provider 251), a second transit provider 252 is used; all this without the visited mobile communication network 100 needing to manage or arrange said connectivity service to each individual location/country/transit network. Again, the transit network switching functionality, is offloaded to the first and second transit providers 251, 252, and (among the interconnecting communication network 200 and the further interconnecting communication network 300), the first transit provider 251 chooses the user equipment 20 to be connected (to the home communication network 400) either via the interconnecting communication network 200 (schematically represented, in Figure 5, by means of drawn-through arrows) or via the further interconnecting communication network 300 (schematically represented, in Figure 5, by means of dotted arrows); thereby, it is advantageously possible, according to the present invention, to provide for, or realize, a dynamic change of the chosen (or selected) transit network 200, 300 based on user equipment 20 location; especially, a transfer of the connection state is performed (between the first transit node 201 (as part of the interconnecting communication network 200) towards the second transit node 301 (as part of the further interconnecting communication network 300)) between the interconnecting communication networks 200, 300.
In case that a transit network 200, 300 is part of a transit provider 250, 251, 252, the functionality can be provided by a (physical, logical or otherwise) transit node 201, 301 of the transit provider placed under the appropriate jurisdiction (e.g. a DRA, SEPP, SCP, GTP Firewall or even a full/partial core network deployed in a specific country/location).

Furthermore according to the present invention, it is especially preferred to provide support of connectivity to multiple networks:
In case of user equipments 20 being connected to multiple networks (e.g. a user equipment 20 simultaneously using, as its visited mobile communication network 100, a non-terrestrial network, and, as a second visited mobile communication network 200', a terrestrial network), it may be advantageous to also take into account the current connectivity and/or subscription-related information (e.g. the PLMN ID/network identifier; standalone non-public networks, SNPNs, use an additional identifier, network identifier, NID, on top of the PLMN ID; in the context of the present invention, the term network identifier or PLMN ID shall also relate to or have the meaning of a network identifier able to specify a standalone non-public network, i.e. comprising a NID) associated with the user equipment 20 (e.g. in the USIM in the user equipment 20).
The situation of the user equipment 20 being connected - besides with (or via) the visited mobile communication network 100, e.g. a non-terrestrial network - also with another serving mobile communication network 400 (dual connectivity) and such other serving mobile communication network 400 happens to be the user equipment's 20 home network 400 (i.e. the user equipment 20 is in coverage of its home network 400, and additionally, of the visited mobile communication network 100). This situation is schematically shown in Figure 8; hence a situation of dual connectivity of the user equipment 20 is shown, especially without a roaming scenario (with regard to the serving home mobile communication network 400). In addition to the home mobile communication network 400 of the considered user equipment 20, Figure 8 shows a transit part 400' (or interconnecting part 400') of the home mobile communication network 400. The visited mobile communication network 100 is connected, to the home (mobile) communication network 400, via - in this example shown in Figure 8 - such an interconnecting part 400' of the home communication network 400.
In such a case, it is preferred according to the present invention that, if possible (i.e. if the serving home mobile communication network 400 also provides - via its interconnecting part 400' - transit network functionality), the visited mobile communication network 100 can choose between different transit networks/transit providers within the same location, such that:
-- user equipments (such as the considered user equipment 20) are able to be directly routed (via such an interconnecting part 400' (or transit part 400') of the home communication network 400) to their home network 400 without going through an intermediate transit network in the same country (i.e. without going through an interconnecting functionality associated with a communication network other than their home (mobile) communication network) but - alternatively - user equipments might also act (or caused to act) otherwise, i.e. going, regarding the interconnecting functionality, via a communication network other than their home (mobile) communication network; however, this possibility is not represented in Figure 8. If the transit network is also an operator, it may be considered national roaming, which has some legal restrictions (e.g. in some countries is not allowed);
-- certain operators may have better conditions with some transit networks (e.g. some customers could be sent via a first IPX provider and other customers could be sent via another IPX provider).

A setup implementing this choice or possibility of a choice (i.e. that the visited mobile communication network 100 can choose between different transit networks/transit providers within the same location) is shown in Figure 9, where some of the transit networks are also networks (i.e. they can play the role of home network for their own subscribers).
If the user equipment 20 is not located in the country (or specific area) of its home communication network 400 (i.e. it belongs to the home communication network 400 but the home communication network 400 is not directly reachable by the user equipment 20), the user equipment 20 and/or the visited mobile communication network 100 can configure (or be configured such that) a preferred partner among the possible transit networks A-1, A-3, 300 is chosen for providing service towards the home communication network 400; these possible transit networks A-1, A-3, 300 are possible alternatives as they are connected to the home communication network 400 (no arrows from other networks A-2, A-4 going towards home communication network 400).
With heterogeneous connectivity options such as in this case, where not every transit network can provide service towards a specific network, it is considered that a transit network can advertise the networks to which it can provide service. This could be implemented as either a simple directory/repository function which could be queried or being advertised directly by each network (or by the network answering queries directly). Due to dual/multiple connectivity, more complex cases can arise, which can also be addressed with this method.
It is advantageously possible that a user equipment 20 of the home communication network 400 is changing one of its serving networks (to which it is simultaneously connected - e.g. two serving networks) - e.g. between network A-1 and network A-2: In this case, the secondary connectivity (i.e. the connectivity besides the visited mobile communication network 100) is switched between serving network A-1 and serving network A-2 (e.g. from one mobile operator in a given country to another mobile operator). The home network 400 obviously remains the same, and the NTN connectivity to the visited mobile communication network 100 is unchanged as well.
In this case, the home communication network 400 or Network A-1 decided to switch the transit network functionality to transit network A-3 because transit network A-2, although a better choice, cannot be used as transit network towards the home communication network 400.
Hence, it is advantageous that transport network connectivity can be used as criteria for transit network switching.
According to the present invention, no inter-PLMN handover is proposed (that already exists, of course), as the following differences exist:
Since the visited mobile communication network 100 covers - as being considered supranational - more than one country, there is no actual network handover; while different frequencies may be used in different tracking areas (TAs) within this visited mobile communication network 100 (which is common and normal), this is just a plain normal inter-frequency handover within a network.
The fact that different TAs are located in different countries is, for technical purposes not relevant. From the user equipment's 20 perspective, it would still be registered in the same PLMN ID (that of the visited mobile communication network 100).
Furthermore, inter-PLMN handover would not be transparent to the user equipment 20, and inter-PLMN handover implies that the connection is handed over between a first serving network and a second serving network when (e.g.) the UE crosses national borders.

## Claims

1. Method for operating a user equipment (20) in different countries with a radio access network (110) of a mobile communication network acting as a visited mobile communication network (100) being a non-terrestrial network with regard to the user equipment (20), wherein the radio access network (110) of the visited mobile communication network (100) that is serving the user equipment (20) uses one network identifier for the different countries,
wherein the user equipment (20) has, or is assigned to, a home communication network (400), and wherein furthermore, an interconnecting communication network (200) and/or a further interconnecting communication network (300) is able to be used between, or to interconnect, the visited mobile communication network (100) and the home communication network (400),
wherein, in order to operate the user equipment (20) with the radio access network of the visited mobile communication network (100) in different countries, the method comprises the following steps:
-- in a first step, the user equipment (20) is operated in a specific country, wherein the interconnecting communication network (200) is used between the visited mobile communication network (100) and the home communication network (400),
-- in a second step, the user equipment (20) is operated in a further specific country,
wherein either the further interconnecting communication network (300) is used between the visited mobile communication network (100) and the home communication network (400), or the home communication network (400) directly interacts with, or is directly connected to, the visited mobile communication network (100).

2. Method according to claim 1, wherein - while the user equipment (20) is operated in the specific country - radiofrequency spectrum resources are used, regarding the user equipment (20), by the radio access network (110) of the visited mobile communication network (100), the radiofrequency spectrum resources being assigned or associated to the interconnecting communication network (200), and wherein - while the user equipment (20) being operated in the further specific country- - further radiofrequency spectrum resources are used, regarding the user equipment (20), by the radio access network (110) of the visited mobile communication network (100), the further radiofrequency spectrum resources being assigned or associated either to the further interconnecting communication network (200) or to the home communication network (400).

3. Method according to one of the preceding claims wherein - while the user equipment (20) is operated in the specific country- the specific country is assigned or associated to the interconnecting communication network (200), and wherein - while the user equipment (20) is operated in the further specific country- the further specific country is assigned or associated either to the further interconnecting communication network (200) or to the home communication network (400).

4. Method according to one of the preceding claims wherein the network identifier is or comprises a public land mobile network identifier.

5. Method according to one of the preceding claims, wherein a dynamic path switching is performed such that:
-- upon the user equipment (20) moving from the specific country to the further specific country, either the further interconnecting communication network (300) or the home communication network (400) is used - between the visited mobile communication network (100) and the home communication network (400) - instead of the interconnecting communication network (200), and
-- upon the user equipment (20) moving from the further specific country to the specific country, the interconnecting communication network (200) is used - between the visited mobile communication network (100) and the home communication network (400) - instead of either the further interconnecting communication network (300) or the home communication network (400).

6. Method according to one of the preceding claims, wherein the dynamic path switching from a source network to a target network - from the interconnecting communication network (200) as source network to either the further interconnecting communication network (300) or to the home communication network (400) as target network when the user equipment (20) moves from the specific country to the further specific country, and from either the further interconnecting communication network (300) or the home communication network (400) as source network to the interconnecting communication network (200) as target network when the user equipment (20) moves from the further specific country to the specific country - is realized implementing a state transfer between the source and target networks,
wherein the state transfer between the source and target networks is realized by means of using
-- an indirect state transfer wherein the visited mobile communication network (100) is transferring, or helping to transfer, the state of the source network towards the target network, and/or
-- a direct state transfer wherein the source network is transferring its state to towards the target network,
wherein the state transfer between the source and target networks involves a transfer of endpoint information between the home communication network (400) and the target network, the endpoint information especially relating to which endpoint information is to be used by the home communication network (400) with regard to the user equipment (20).

7. Method according to one of the preceding claims, wherein the dynamic path switching and/or the state transfer between the source and target networks is performed by the visited mobile communication network (100) or by an interconnection provider, especially an IPX provider or an IPX provider network, wherein especially the IPX provider or the IPX provider network or the interconnection provider comprises any of the following functionality:
-- dynamic path switching, source network and target network,
-- dynamic path switching and source network, especially to a target network not comprised in the IPX provider or the IPX provider network or the interconnection provider,
-- dynamic path switching, between a source network and a target network not comprised in the IPX provider or the IPX provider network or the interconnection provider
-- target network, when a further IPX provider or further IPX provider network or further interconnection provider comprises the functionality of the target network
such that both while the user equipment (20) is operated in the specific country as well as while the user equipment (20) is operated in the further specific country the IPX provider or the IPX provider network or the interconnection provider is used between the visited mobile communication network (100) and the home communication network (400).

8. Method according to one of the preceding claims wherein the interconnecting communication network (200) and/or the further interconnecting communication network (300) comprise, are or correspond to a user plane function, UPF; access and mobility management function, AMF session management function, SMF; service communication proxy, SCP; secure edge protection proxy, SEPP; call session control function, CSCF; mobility management entity, MME; serving gateway, SGW; diameter routing agent, DRA; intercept related information point of interception, IRI-POI, general packet radio service tunnelling protocol, GTP, firewall.

9. Method according to one of the preceding claims, wherein the user equipment (20) is served - besides by the radio access network (110) of the visited mobile communication network (100) - by a further mobile communication network (500), wherein the visited mobile communication network (100) and the further mobile communication network (500) provide dual access to the user equipment (20).

10. System or mobile communication network (100) for operating a user equipment (20) in different countries with a radio access network (110) of the mobile communication network acting as a visited mobile communication network (100) being a non-terrestrial network with regard to the user equipment (20), wherein the radio access network (110) of the visited mobile communication network (100) that is serving the user equipment (20) uses one network identifier for the different countries,
wherein the user equipment (20) has, or is assigned to, a home communication network (400), and wherein furthermore, an interconnecting communication network (200) and/or a further interconnecting communication network (300) is able to be used between, or to interconnect, the visited mobile communication network (100) and the home communication network (400),
wherein, in order to operate the user equipment (20) with the radio access network of the visited mobile communication network (100) in different countries, the system or mobile communication network (100) is configured such that:
-- the user equipment (20) is operated in a specific country, wherein the interconnecting communication network (200) is used between the visited mobile communication network (100) and the home communication network (400),
-- the user equipment (20) is operated in a further specific country, wherein either the further interconnecting communication network (300) is used between the visited mobile communication network (100) and the home communication network (400), or the home communication network (400) directly interacts with, or is directly connected to, the visited mobile communication network (100).

11. Program comprising a computer readable program code, which, when executed on at least one processor of a system or a visited mobile communication network being a non-terrestrial network, causes the system or the visited mobile communication network (100) being a non-terrestrial network to perform a method according one of claims 1 to 8.

12. Computer-readable medium comprising instructions which when executed on at least one processor of a system or a visited mobile communication network being a non-terrestrial network, causes the system or the visited mobile communication network (100) being a non-terrestrial network to perform a method according one of claims 1 to 8.

## Patentansprüche

1. Verfahren zum Betreiben eines Benutzergeräts (20) in verschiedenen Ländern mit einem Funkzugangsnetz (110) eines Mobilfunknetzes, das als besuchtes Mobilfunknetz (100) fungiert und in Bezug auf das Benutzergerät (20) ein nicht-terrestrisches Netz ist, wobei das Funkzugangsnetz (110) des besuchten Mobilfunknetzes (100), das das Benutzergerät (20) versorgt, eine Netzkennung für die verschiedenen Länder verwendet,
wobei das Benutzergerät (20) ein Heimnetz (400) hat oder einem Heimnetz (400) zugeordnet ist, und wobei ferner ein Verbindungsnetz (200) und/oder ein weiteres Verbindungsnetz (300) zwischen dem besuchten Mobilfunknetz (100) und dem Heimnetz (400) verwendbar ist oder diese verbindet,
wobei das Verfahren, um das Benutzergerät (20) mit dem Funkzugangsnetz des besuchten Mobilfunknetzes (100) in verschiedenen Ländern zu betreiben, die folgenden Schritte umfasst:
-- in einem ersten Schritt wird das Benutzergerät (20) in einem bestimmten Land betrieben, wobei das Verbindungsnetz (200) zwischen dem besuchten Mobilfunknetz (100) und dem Heimnetz (400) verwendet wird;
-- in einem zweiten Schritt wird das Benutzergerät (20) in einem weiteren bestimmten Land betrieben, wobei entweder das weitere Verbindungsnetz (300) zwischen dem besuchten Mobilfunknetz (100) und dem Heimnetz (400) verwendet wird oder das Heimnetz (400) direkt mit dem besuchten Mobilfunknetz (100) zusammenwirkt oder direkt mit diesem verbunden ist.

2. Verfahren nach Anspruch 1, wobei - während das Benutzergerät (20) in dem bestimmten Land betrieben wird - Hochfrequenz-Spektrumressourcen in Bezug auf das Benutzergerät (20) durch das Funkzugangsnetz (110) des besuchten Mobilfunknetzes (100) genutzt werden, wobei diese Hochfrequenz-Spektrumressourcen dem Verbindungsnetz (200) zugeordnet oder mit diesem assoziiert sind, und wobei - während das Benutzergerät (20) in dem weiteren bestimmten Land betrieben wird - weitere Hochfrequenz-Spektrumressourcen in Bezug auf das Benutzergerät (20) durch das Funkzugangsnetz (110) des besuchten Mobilfunknetzes (100) genutzt werden, wobei die weiteren Hochfrequenz-Spektrumressourcen entweder dem weiteren Verbindungsnetz (300) oder dem Heimnetz (400) zugeordnet oder mit diesem assoziiert sind.

3. Verfahren nach einem der vorhergehenden Ansprüche, wobei - während das Benutzergerät (20) in dem bestimmten Land betrieben wird - das bestimmte Land dem Verbindungsnetz (200) zugeordnet oder mit diesem assoziiert ist, und wobei - während das Benutzergerät (20) in dem weiteren bestimmten Land betrieben wird - das weitere bestimmte Land entweder dem weiteren Verbindungsnetz (300) oder dem Heimnetz (400) zugeordnet oder mit diesem assoziiert ist.

4. Verfahren nach einem der vorhergehenden Ansprüche, wobei die Netzkennung eine öffentliche Landfunknetz-Kennung ist oder eine solche umfasst.

5. Verfahren nach einem der vorhergehenden Ansprüche, wobei eine dynamische Pfadumschaltung derart durchgeführt wird, dass:
-- wenn das Benutzergerät (20) von dem bestimmten Land in das weitere bestimmte Land wechselt, entweder das weitere Verbindungsnetz (300) oder das Heimnetz (400) - zwischen dem besuchten Mobilfunknetz (100) und dem Heimnetz (400) - anstelle des Verbindungsnetzes (200) verwendet wird, und
-- wenn das Benutzergerät (20) von dem weiteren bestimmten Land in das bestimmte Land wechselt, das Verbindungsnetz (200) - zwischen dem besuchten Mobilfunknetz (100) und dem Heimnetz (400) - anstelle des weiteren Verbindungsnetzes (300) oder des Heimnetzes (400) verwendet wird.

6. Verfahren nach einem der vorhergehenden Ansprüche, wobei die dynamische Pfadumschaltung von einem Quellnetz zu einem Zielnetz - vom Verbindungsnetz (200) als Quellnetz zum weiteren Verbindungsnetz (300) oder zum Heimnetz (400) als Zielnetz, wenn das Benutzergerät (20) von dem bestimmten Land in das weitere bestimmte Land wechselt, und vom weiteren Verbindungsnetz (300) oder vom Heimnetz (400) als Quellnetz zum Verbindungsnetz (200) als Zielnetz, wenn das Benutzergerät (20) von dem weiteren bestimmten Land in das bestimmte Land wechselt - durch Implementierung einer Zustandsübertragung zwischen Quellnetz und Zielnetz realisiert wird,
wobei die Zustandsübertragung zwischen Quellnetz und Zielnetz durch Verwendung der folgenden Mittel realisiert wird:
-- eine indirekte Zustandsübertragung, bei der das besuchte Mobilfunknetz (100) den Zustand des Quellnetzes auf das Zielnetz überträgt oder bei der Übertragung mitwirkt, und/oder
-- eine direkte Zustandsübertragung, bei der das Quellnetz seinen Zustand direkt auf das Zielnetz überträgt,
wobei die Zustandsübertragung zwischen Quellnetz und Zielnetz eine Übertragung von Endpunktinformationen zwischen dem Heimnetz (400) und dem Zielnetz umfasst, wobei sich die Endpunktinformationen insbesondere darauf beziehen, welche Endpunktinformationen vom Heimnetz (400) in Bezug auf das Benutzergerät (20) zu verwenden sind.

7. Verfahren nach einem der vorhergehenden Ansprüche, wobei die dynamische Pfadumschaltung und/oder die Zustandsübertragung zwischen Quellnetz und Zielnetz durch das besuchte Mobilfunknetz (100) oder durch einen Verbindungsanbieter, insbesondere einen IPX-Anbieter oder ein IPX-Anbieternetz, durchgeführt wird,
wobei insbesondere der IPX-Anbieter oder das IPX-Anbieternetz oder der Verbindungsanbieter eine der folgenden Funktionalitäten umfasst:
-- dynamische Pfadumschaltung, Quellnetz und Zielnetz,
-- dynamische Pfadumschaltung und Quellnetz, insbesondere zu einem Zielnetz, das nicht im IPX-Anbieter oder im IPX-Anbieternetz oder im Verbindungsanbieter enthalten ist,
-- dynamische Pfadumschaltung zwischen einem Quellnetz und einem Zielnetz, die nicht im IPX-Anbieter oder im IPX-Anbieternetz oder im Verbindungsanbieter enthalten sind,
-- Zielnetz, wenn ein weiterer IPX-Anbieter oder ein weiteres IPX-Anbieternetz oder ein weiterer Verbindungsanbieter die Funktionalität des Zielnetzes umfasst,
sodass sowohl während das Benutzergerät (20) in dem bestimmten Land betrieben wird als auch während es in dem weiteren bestimmten Land betrieben wird, der IPX-Anbieter oder das IPX-Anbieternetz oder der Verbindungsanbieter zwischen dem besuchten Mobilfunknetz (100) und dem Heimnetz (400) verwendet wird.

8. Verfahren nach einem der vorhergehenden Ansprüche, wobei das Verbindungsnetz (200) und/oder das weitere Verbindungsnetz (300) eine Benutzerebenen-Funktion (UPF), eine Zugangs- und Mobilitätsverwaltungsfunktion (AMF), eine Sitzungsverwaltungsfunktion (SMF), einen Dienst-Kommunikations-Proxy (SCP), einen sicheren Rand-Schutz-Proxy (SEPP), eine Anrufsteuerungs-Funktion (CSCF), eine Mobilitätsverwaltungseinheit (MME), ein Serving-Gateway (SGW), einen Diameter-Routing-Agenten (DRA), einen Abhör-Schnittpunkt für abfangrelevante Informationen (IRI-POI), ein GPRS-Tunneling-Protokoll (GTP) oder eine Firewall umfasst, darstellt oder diesen entspricht.

9. Verfahren nach einem der vorhergehenden Ansprüche, wobei das Benutzergerät (20) - neben dem Funkzugangsnetz (110) des besuchten Mobilfunknetzes (100) - durch ein weiteres Mobilfunknetz (500) versorgt wird, wobei das besuchte Mobilfunknetz (100) und das weitere Mobilfunknetz (500) dem Benutzergerät (20) Doppelzugang bieten.

10. System oder Mobilfunknetz (100) zum Betreiben eines Benutzergeräts (20) in verschiedenen Ländern mit einem Funkzugangsnetz (110) des Mobilfunknetzes, das als besuchtes Mobilfunknetz (100) fungiert und in Bezug auf das Benutzergerät (20) ein nicht-terrestrisches Netz ist, wobei das Funkzugangsnetz (110) des besuchten Mobilfunknetzes (100), das das Benutzergerät (20) versorgt, eine Netzkennung für die verschiedenen Länder verwendet,
wobei das Benutzergerät (20) ein Heimnetz (400) hat oder einem Heimnetz (400) zugeordnet ist, und wobei ferner ein Verbindungsnetz (200) und/oder ein weiteres Verbindungsnetz (300) zwischen dem besuchten Mobilfunknetz (100) und dem Heimnetz (400) verwendbar ist oder diese verbindet,
wobei das System oder Mobilfunknetz (100), um das Benutzergerät (20) mit dem Funkzugangsnetz des besuchten Mobilfunknetzes (100) in verschiedenen Ländern zu betreiben, derart konfiguriert ist, dass:
-- das Benutzergerät (20) in einem bestimmten Land betrieben wird, wobei das Verbindungsnetz (200) zwischen dem besuchten Mobilfunknetz (100) und dem Heimnetz (400) verwendet wird;
-- das Benutzergerät (20) in einem weiteren bestimmten Land betrieben wird, wobei entweder das weitere Verbindungsnetz (300) zwischen dem besuchten Mobilfunknetz (100) und dem Heimnetz (400) verwendet wird oder das Heimnetz (400) direkt mit dem besuchten Mobilfunknetz (100) zusammenwirkt oder direkt mit diesem verbunden ist.

11. Programm, das einen computerlesbaren Programmcode umfasst, der, wenn er auf mindestens einem Prozessor eines Systems oder eines besuchten Mobilfunknetzes, das ein nicht-terrestrisches Netz ist, ausgeführt wird, das System oder das besuchte Mobilfunknetz (100), das ein nicht-terrestrisches Netz ist, veranlasst, ein Verfahren nach einem der Ansprüche 1 bis 8 durchzuführen.

12. Computerlesbares Medium, das Anweisungen umfasst, die, wenn sie auf mindestens einem Prozessor eines Systems oder eines besuchten Mobilfunknetzes, das ein nicht-terrestrisches Netz ist, ausgeführt werden, das System oder das besuchte Mobilfunknetz (100), das ein nicht-terrestrisches Netz ist, veranlassen, ein Verfahren nach einem der Ansprüche 1 bis 8 durchzuführen.

## Revendications

1. Procédé pour faire fonctionner un équipement utilisateur (20) dans différents pays avec un réseau d'accès radio (110) d'un réseau de communication mobile faisant office de réseau de communication mobile visité (100) constituant un réseau non terrestre vis-à-vis de l'équipement utilisateur (20), dans lequel le réseau d'accès radio (110) du réseau de communication mobile visité (100) qui dessert l'équipement utilisateur (20) utilise un identifiant de réseau pour les différents pays,
dans lequel l'équipement utilisateur (20) dispose d'un réseau de communication domestique (400) ou lui est attribué, et dans lequel, en outre, un réseau de communication d'interconnexion (200) et/ou un autre réseau de communication d'interconnexion (300) peut être utilisé entre le réseau de communication mobile visité (100) et le réseau de communication domestique (400) ou peut les interconnecter,
dans lequel, afin de faire fonctionner l'équipement utilisateur (20) avec le réseau d'accès radio du réseau de communication mobile visité (100) dans différents pays, le procédé comprend les étapes suivantes :
-- dans une première étape, l'équipement utilisateur (20) est exploité dans un pays déterminé, dans lequel le réseau de communication d'interconnexion (200) est utilisé entre le réseau de communication mobile visité (100) et le réseau de communication domestique (400) ;
-- dans une deuxième étape, l'équipement utilisateur (20) est exploité dans un autre pays déterminé, dans lequel soit l'autre réseau de communication d'interconnexion (300) est utilisé entre le réseau de communication mobile visité (100) et le réseau de communication domestique (400), soit le réseau de communication domestique (400) interagit directement avec le réseau de communication mobile visité (100) ou y est directement connecté.

2. Procédé selon la revendication 1, dans lequel - pendant que l'équipement utilisateur (20) est exploité dans le pays déterminé - des ressources de spectre de radiofréquences sont utilisées, pour ce qui concerne l'équipement utilisateur (20), par le réseau d'accès radio (110) du réseau de communication mobile visité (100), lesdites ressources de spectre de radiofréquences étant attribuées au réseau de communication d'interconnexion (200) ou associées à celui-ci, et dans lequel - pendant que l'équipement utilisateur (20) est exploité dans l'autre pays déterminé - d'autres ressources de spectre de radiofréquences sont utilisées, pour ce qui concerne l'équipement utilisateur (20), par le réseau d'accès radio (110) du réseau de communication mobile visité (100), lesdites autres ressources de spectre de radiofréquences étant attribuées soit à l'autre réseau de communication d'interconnexion (300), soit au réseau de communication domestique (400), ou associées à ceux-ci.

3. Procédé selon l'une des revendications précédentes, dans lequel - pendant que l'équipement utilisateur (20) est exploité dans le pays déterminé - le pays déterminé est attribué au réseau de communication d'interconnexion (200) ou associé à celui-ci, et dans lequel - pendant que l'équipement utilisateur (20) est exploité dans l'autre pays déterminé - l'autre pays déterminé est attribué soit à l'autre réseau de communication d'interconnexion (300), soit au réseau de communication domestique (400), ou associé à ceux-ci.

4. Procédé selon l'une des revendications précédentes, dans lequel l'identifiant de réseau est ou comprend un identifiant de réseau mobile terrestre public.

5. Procédé selon l'une des revendications précédentes, dans lequel une commutation de chemin dynamique est effectuée de telle sorte que :
-- lorsque l'équipement utilisateur (20) se déplace du pays déterminé vers l'autre pays déterminé, soit l'autre réseau de communication d'interconnexion (300), soit le réseau de communication domestique (400) est utilisé - entre le réseau de communication mobile visité (100) et le réseau de communication domestique (400) - à la place du réseau de communication d'interconnexion (200), et
-- lorsque l'équipement utilisateur (20) se déplace de l'autre pays déterminé vers le pays déterminé, le réseau de communication d'interconnexion (200) est utilisé - entre le réseau de communication mobile visité (100) et le réseau de communication domestique (400) - à la place soit de l'autre réseau de communication d'interconnexion (300), soit du réseau de communication domestique (400).

6. Procédé selon l'une des revendications précédentes, dans lequel la commutation de chemin dynamique d'un réseau source vers un réseau cible - du réseau de communication d'interconnexion (200) en tant que réseau source vers soit l'autre réseau de communication d'interconnexion (300), soit le réseau de communication domestique (400) en tant que réseau cible lorsque l'équipement utilisateur (20) se déplace du pays déterminé vers l'autre pays déterminé, et de soit l'autre réseau de communication d'interconnexion (300), soit le réseau de communication domestique (400) en tant que réseau source vers le réseau de communication d'interconnexion (200) en tant que réseau cible lorsque l'équipement utilisateur (20) se déplace de l'autre pays déterminé vers le pays déterminé - est réalisée en mettant en œuvre un transfert d'état entre le réseau source et le réseau cible,
dans lequel le transfert d'état entre le réseau source et le réseau cible est réalisé au moyen de :
-- un transfert d'état indirect dans lequel le réseau de communication mobile visité (100) transfère, ou contribue à transférer, l'état du réseau source vers le réseau cible, et/ou
-- un transfert d'état direct dans lequel le réseau source transfère son état directement vers le réseau cible,
dans lequel le transfert d'état entre le réseau source et le réseau cible implique un transfert d'informations de point d'extrémité entre le réseau de communication domestique (400) et le réseau cible, ladite information de point d'extrémité concernant notamment quelle information de point d'extrémité doit être utilisée par le réseau de communication domestique (400) vis-à-vis de l'équipement utilisateur (20).

7. Procédé selon l'une des revendications précédentes, dans lequel la commutation de chemin dynamique et/ou le transfert d'état entre le réseau source et le réseau cible est effectué par le réseau de communication mobile visité (100) ou par un fournisseur d'interconnexion, notamment un fournisseur IPX ou un réseau de fournisseur IPX,
dans lequel notamment le fournisseur IPX ou le réseau de fournisseur IPX ou le fournisseur d'interconnexion comprend l'une des fonctionnalités suivantes :
-- commutation de chemin dynamique, réseau source et réseau cible,
-- commutation de chemin dynamique et réseau source, notamment vers un réseau cible non compris dans le fournisseur IPX ou le réseau de fournisseur IPX ou le fournisseur d'interconnexion,
-- commutation de chemin dynamique entre un réseau source et un réseau cible non compris dans le fournisseur IPX ou le réseau de fournisseur IPX ou le fournisseur d'interconnexion,
-- réseau cible, lorsqu'un autre fournisseur IPX ou un autre réseau de fournisseur IPX ou un autre fournisseur d'interconnexion comprend la fonctionnalité du réseau cible,
de sorte que tant pendant que l'équipement utilisateur (20) est exploité dans le pays déterminé que pendant qu'il est exploité dans l'autre pays déterminé, le fournisseur IPX ou le réseau de fournisseur IPX ou le fournisseur d'interconnexion est utilisé entre le réseau de communication mobile visité (100) et le réseau de communication domestique (400).

8. Procédé selon l'une des revendications précédentes, dans lequel le réseau de communication d'interconnexion (200) et/ou l'autre réseau de communication d'interconnexion (300) comprend, constitue ou correspond à une fonction de plan utilisateur (UPF), une fonction de gestion des accès et de la mobilité (AMF), une fonction de gestion de session (SMF), un mandataire de communication de service (SCP), un mandataire de protection de bordure sécurisée (SEPP), une fonction de contrôle de session d'appel (CSCF), une entité de gestion de la mobilité (MME), une passerelle de desserte (SGW), un agent de routage Diameter (DRA), un point d'interception des informations liées à l'interception (IRI-POI), un protocole de tunnellisation du service général de radiocommunication par paquets (GTP) ou un pare-feu.

9. Procédé selon l'une des revendications précédentes, dans lequel l'équipement utilisateur (20) est desservi - outre par le réseau d'accès radio (110) du réseau de communication mobile visité (100) - par un autre réseau de communication mobile (500), dans lequel le réseau de communication mobile visité (100) et l'autre réseau de communication mobile (500) fournissent un accès double à l'équipement utilisateur (20).

10. Système ou réseau de communication mobile (100) pour faire fonctionner un équipement utilisateur (20) dans différents pays avec un réseau d'accès radio (110) du réseau de communication mobile faisant office de réseau de communication mobile visité (100) constituant un réseau non terrestre vis-à-vis de l'équipement utilisateur (20), dans lequel le réseau d'accès radio (110) du réseau de communication mobile visité (100) qui dessert l'équipement utilisateur (20) utilise un identifiant de réseau pour les différents pays, dans lequel l'équipement utilisateur (20) dispose d'un réseau de communication domestique (400) ou lui est attribué, et dans lequel, en outre, un réseau de communication d'interconnexion (200) et/ou un autre réseau de communication d'interconnexion (300) peut être utilisé entre le réseau de communication mobile visité (100) et le réseau de communication domestique (400) ou peut les interconnecter,
dans lequel, afin de faire fonctionner l'équipement utilisateur (20) avec le réseau d'accès radio du réseau de communication mobile visité (100) dans différents pays, le système ou le réseau de communication mobile (100) est configuré de telle sorte que :
-- l'équipement utilisateur (20) est exploité dans un pays déterminé, dans lequel le réseau de communication d'interconnexion (200) est utilisé entre le réseau de communication mobile visité (100) et le réseau de communication domestique (400) ;
-- l'équipement utilisateur (20) est exploité dans un autre pays déterminé, dans lequel soit l'autre réseau de communication d'interconnexion (300) est utilisé entre le réseau de communication mobile visité (100) et le réseau de communication domestique (400), soit le réseau de communication domestique (400) interagit directement avec le réseau de communication mobile visité (100) ou y est directement connecté.

11. Programme comprenant un code de programme lisible par ordinateur qui, lorsqu'il est exécuté sur au moins un processeur d'un système ou d'un réseau de communication mobile visité constituant un réseau non terrestre, amène le système ou le réseau de communication mobile visité (100) constituant un réseau non terrestre à mettre en œuvre un procédé selon l'une des revendications 1 à 8.

12. Support lisible par ordinateur comprenant des instructions qui, lorsqu'elles sont exécutées sur au moins un processeur d'un système ou d'un réseau de communication mobile visité constituant un réseau non terrestre, amènent le système ou le réseau de communication mobile visité (100) constituant un réseau non terrestre à mettre en œuvre un procédé selon l'une des revendications 1 à 8.
